# EUROPEAN PATENT SPECIFICATION

(11) **EP 2 634 773 B1**
(45) Date of publication and mention of the grant of the patent: **30.12.2020**
(21) Application number: 13157604.3
(22) Date of filing: 04.03.2013
(51) Int. Cl.: G11B 27/034, G11B 27/34, G11B 27/11

(54) **System and method for operating memo function cooperating with audio recording function**
System und Verfahren zum Betrieb einer Notizfunktion, die mit einer Audioaufzeichnungsfunktion zusammenarbeitet
Système et procédé pour faire fonctionner une fonction de mémoire coopérant avec une fonction d'enregistrement audio

(30) Priority: 02.03.2012 KR 20120021941
(43) Date of publication of application: 04.09.2013
(73) Proprietor: Samsung Electronics Co., Ltd., Gyeonggi-do 443-742 (KR)
(72) Inventor: Cho, Sungjae, 443-742 Gyeonggi-do (KR)
(74) Representative: Nederlandsch Octrooibureau

(56) References cited:
- WO-A1-93/21588
- US-A1- 2007 294 374
- US-A1- 2008 071 827
- US-A1- 2009 240 734
- US-A1- 2011 154 199
- US-A1- 2011 184 738
- US-A1- 2011 295 596

## Description

### BACKGROUND OF THE INVENTION

### 1. Field of the Invention:

The present invention relates to a memo function. More particularly, the invention relates to a system and method that operates a memo function cooperating with an audio recording function.

### 2. Description of the Related Art:

Mobile devices are mobile, electronic communication devices that may support a call function, and are used in a variety of areas. Mobile devices are equipped with various types of input systems to provide user functions. For example, mobile devices may employ touch screens. A touch screen includes a touch panel and a display panel. Mobile devices with touch screens display screen data, e.g., images, on the display panel and detect a user's touch to select an image, displayed on the display panel, via the touch panel. Mobile devices may provide a variety of functions, e.g., a voice call, an audio playback, a message transmission/reception, a digital broadcast reproducing function, a short-range Radio Frequency (RF) communication function, an Internet access function, etc. Mobile devices may also be equipped with a multitasking function to execute a number of operations simultaneously.

Mobile devices may also be equipped with a memo function. With the memo function, users can record information in the mobile devices regarding specific events. However, the memo function of the related art is operated such that a notepad is activated, users are able to input text, and the text is stored. Since users are apt to input a memo in a summarized form or in an acronym/abbreviated form via the memo function, if they check the memo later, they may have difficulty understanding what the memo means. That is, memo functions of the related art are inconvenient to use since users may not easily recall the meaning of the memos they record. Therefore, the memo function is not often used.

Patent publication US 2008/071827 A1, HENGEL CHARLES [US] ET AL, 20 March 2008, shows a graphic user interface for adding comments associated with time marks of media content, on which the comments, and a time bar of the media content, are displayed.

Therefore, a need exists for a system and method for a memo function that is convenient to use.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide a system and method that can execute a memo function cooperating with an audio recording function, and can allow users to write and store a memo associated with recorded audio data.

Another aspect of the present invention is to provide a system and method that can execute a memo function cooperating with an audio recording function, create an object corresponding to an input memo, and store the created object that matches an index point of recorded audio data.

Another aspect of the present invention is to provide a system and method for operating a memo function cooperating with an audio recording function that can move a position where recorded audio data is played back, according to a selection of an object on a screen displaying a memo.

In accordance with an aspect of the present invention, a method for operating a memo function cooperating with an audio recording function is provided. The method includes executing a memo including memo data synchronized with audio data, wherein the memo data is configured to a plurality of objects, and each object is mapped to a index point of the audio data, and outputting a screen corresponding to the execution of the memo, wherein the screen displays a progress bar for displaying a playback state of the audio data to first area and displays the memo data to a second area.

In accordance with another aspect of the present invention, a system for operating a memo function cooperating with an audio recording function is provided. The system includes a storage unit for storing a memo including memo data synchronized with audio data, wherein the memo data is configured to a plurality of objects, and each object is mapped to a index point of the audio data, a controller for controlling a execution of the memo including memo data synchronized with audio data, and a touch screen for displaying a screen corresponding to the execution of the memo, wherein the screen displays a progress bar for displaying a playback state of the audio data to first area and displays the memo data to a second area.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will become more apparent from the following description taken in conjunction with the accompanying drawings, in which:
FIG. 1 illustrates a schematic block diagram of a mobile device according to an exemplary embodiment of the present invention;
FIG. 2 illustrates a flowchart describing a method for writing a memo according to a first exemplary embodiment of the present invention;
FIG. 3 illustrates a flowchart describing a method for writing a memo according to a second exemplary embodiment of the present invention;
FIGs. 4A and 4B illustrate views describing a method for creating objects according to an exemplary embodiment of the present invention;
FIGs. 5A and 5B illustrate views describing a method for creating objects according to an exemplary embodiment of the present invention;
FIG. 6 illustrates a flowchart describing a method for outputting a memo according to an exemplary embodiment of the present invention; and
FIG. 7 illustrates screens displaying a created memo on a screen according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims.

It is to be understood that the singular forms "a," "an," and "the" include plural referents unless the context clearly dictates otherwise. Thus, for example, reference to "a component surface" includes reference to one or more of such surfaces.

Although exemplary embodiments of the invention are described for illustrative purposes, a person skilled in the art will appreciate that various modifications and changes may be made to the specific exemplary embodiments described below without departing from the scope of the invention. Thus, the specification and drawings are to be regarded as illustrative and exemplary rather than restrictive or all-encompassing, and all such modifications to the specific exemplary embodiments described below are intended to be included within the scope of the invention.

In the following description, a mobile device can be implemented as mobile communication terminals, Personal Digital Assistants (PDAs), smart phones, tablet personal computers (PCs), Portable Multimedia Players (PMPs), electronic book readers, laptop computers, net book computers, etc.

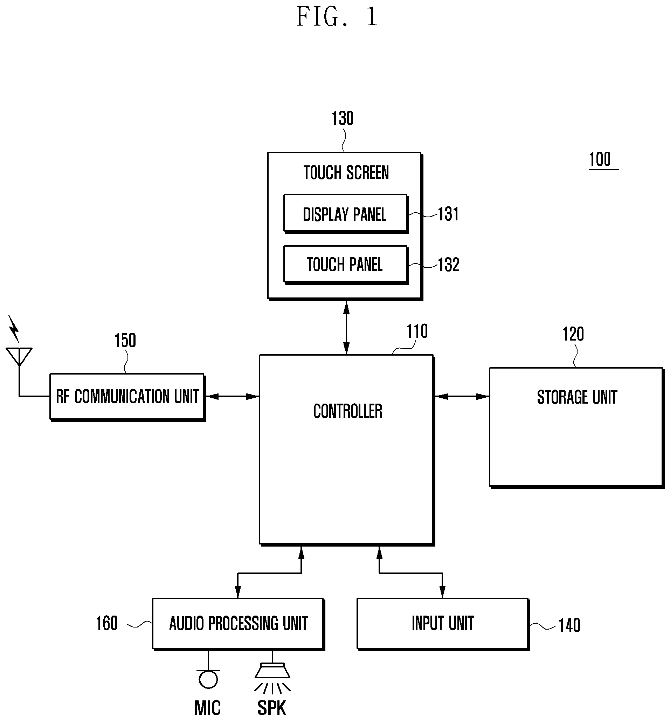

FIG. 1 illustrates a schematic block diagram of a mobile device according to an exemplary embodiment of the present invention.

Referring to FIG. 1, a mobile device 100 includes a storage unit 120, a touch screen 130, an input unit 140, a Radio Frequency (RF) communication unit 150, an audio processing unit 160, and a controller 110. The touch screen 130 includes a display panel 131 and a touch panel 132.

The mobile device 100 can execute a memo function cooperating with an audio recording function. If an audio recording function is executed while a memo function is being executed, a memo function is executed while an audio recording function is being executed, or a memo function and an audio recording function are simultaneously executed, the mobile device 100 creates an object from the user's written memo, according to a predefined rule, synchronizes the created object with the index point of the recorded audio data, and stores it. That is, the mobile device 100 can store the object, created when a memo is input, by synchronizing with the timeline of the recorded audio data. The mobile device 100 provides a menu for controlling the playback of the recorded audio data when outputting the stored memo. If users cannot recall the content of a stored memo, they can play back the audio data recorded when the memo was written via the control menu, thereby recalling the content of the memo. In particular, since an object of a memo has matched an index point of a recorded audio data, the mobile device 100 can easily play back the audio data recorded when the memo was written on the memo displaying screen. That is, if an object is selected (e.g., touched) on the memo displaying screen, the mobile device 100 can play back the recorded audio data at a position that matches with the selected object. Therefore, although audio data and memos are recorded in the mobile device 100 for a relatively long period of time, e.g., during a lecture, seminar, conference, etc., the system and method according to exemplary embodiments of the present invention can easily play back the recorded audio data related to corresponding memos. In the following description, the components of the mobile device 100 are described in detail referring to the accompanying drawings.

The RF communication unit 150 establishes a communication channel for making a voice/video call with a base station. The RF communication unit 150 also establishes a communication channel for transmitting/receiving data to/from a base station. To this end, the RF communication unit 150 includes an RF transmitter (not shown) for up-converting the frequency of signals to be transmitted and amplifying the signals, an RF receiver (not shown) for low-noise amplifying received RF signals and down-converting the frequency of the received RF signals, and a duplexer (not shown) for separating received signals and signals to be transmitted.

The audio processing unit 160 includes a speaker SPK and a microphone MIC. The audio processing unit 160 outputs audio data, transmitted/received during a call, audio data included in a received message, and audio data created when audio files stored in the storage unit 120 are played back, via the speaker. The audio processing unit 160 receives a user's voice or other audio sounds via the microphone. In particular, when the memo function and the audio recording function are executed in the mobile device 100, the audio processing unit 160 can receive an audio signal via the microphone as audio data while the user is writing a memo. After that, the audio processing unit 160 stores the received audio data mapped to an object of the memo under control of the controller 110. For example, if a user executes a memo function and an audio recording function in a mobile device 100 in an environment, e.g., a lecture, a seminar, a conference, etc., and writes a memo on the memo screen, the audio processing unit 160 collects the external audio signal via the microphone as audio data and stores it so it is associated with the input memo. If a user executes a memo function in a mobile device 100, executing a voice/video calling and playing back a broadcast or music, and inputs a memo on the memo screen, the audio data, created according to the voice/video call and the playback of the broadcast or music, are mapped to the input memo data and stored in the storage unit 120. Although the exemplary embodiment shown in FIG. 1 is implemented in such a way that the audio processing unit 160 includes one microphone for making a voice/video call, it should be understood that the invention is not limited to the exemplary embodiment. That is, the audio processing unit 160 may further include a second microphone that can be activated when an audio recording function is turned on, preferably, a high-fidelity microphone. The high-fidelity microphone can allow users to write down a lecture that a speaker, relatively far apart from them, is making in a lecture room, in a state where a memo function and an audio recording function are executed in the mobile device. However, this operation may not be faithfully performed by the mobile device 100 using only a microphone for making a voice/video call.

The input unit 140 includes input keys and function keys that receive numbers and letters and set and control a variety of functions in the mobile device 100. The input unit 140 transfers, to the controller 110, a variety of input signals for turning on/off a memo function and an audio recording function, searching for a memo, i.e., outputting a list of memos, selecting one of the memos in the list, selecting a specific object on a memo displaying screen, playing back recorded audio data, etc. The input unit 140 may be implemented with one of a button key pad, a ball joystick, an optical joystick, a wheel key, touch keys, a touch pad, a touch screen, etc., or a combination thereof.

The touch screen 130 performs an input function and a display function. To this end, the touch screen 130 includes the display panel 131 and the touch panel 132.

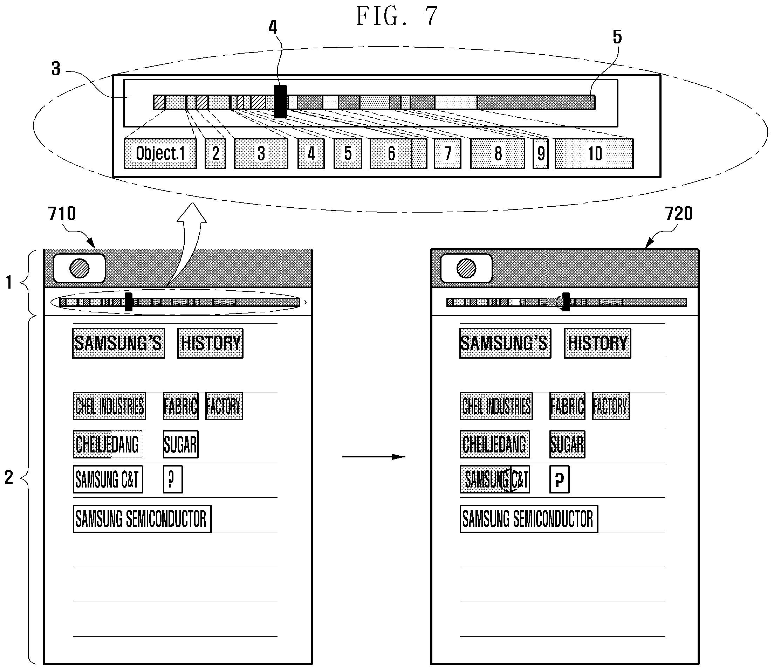

The display panel 131 displays menus of the mobile device 100, and information input by the user or information provided to the user. The display panel 131 provides various types of screens according to the operations of the mobile device 100, such as an idle screen (e.g., home screen), menu screens, a message writing screen, a call screen, a schedule management screen, a contact list display screen, a web page display screen, etc. The display panel 131 may display an icon or a menu for activating a memo function on a certain area on the screen. The icon may be replaced with a specific side key. In addition, the display panel 131 may also display a screen for allowing a user to write a memo or a screen for displaying the written memo. The memo writing screen may include a tool box for writing a memo. The tool box includes a number of tools for inputting text, diagrams, lines, symbols, emoticons, etc. The memo writing screen may also include a menu for executing an audio recording function. If a memo includes recorded audio data, the memo displaying screen shows a first area for controlling the playback of the recorded audio data and a second area for displaying the memo content. This will be described in detail further below with reference to FIG. 7. The display unit 131 may be implemented with a Liquid Crystal Display (LCD), Light Emitting Diode (LEDs), Organic Light Emitting Diodes (OLEDs), Active Matrix Organic Light Emitting Diodes (AMOLEDs), or the like.

The touch panel 132 is disposed on the display panel 131. The touch panel 132 detects a touch event by a touch tool, e.g., a user's finger, a stylus pen, or the like, creates a corresponding signal, and transfers it to the controller 110. The touch panel 132 detects the change in a physical quantity (e.g., capacitance, resistance, etc.) according to the presence of a touch by a touch tool, and transfers information regarding the touch location to the controller 110. Since the operations of the touch panel are well-known to an ordinary person skilled in the art, a detailed description is omitted in the following description. The touch panel 132 may include a first touch panel for detecting general touches such as a user's gestures, and a second touch panel for allowing a user to input memos with additional accuracy via stylus or electronic pen, etc. The touch panel 132 may performs the functions described herein of the input unit 140, and in that case, the input unit 140 may be omitted. Further, the input unit 140 may perform the functions described herein of the touch panel 132, and in that case, the touch panel 132 may be omitted.

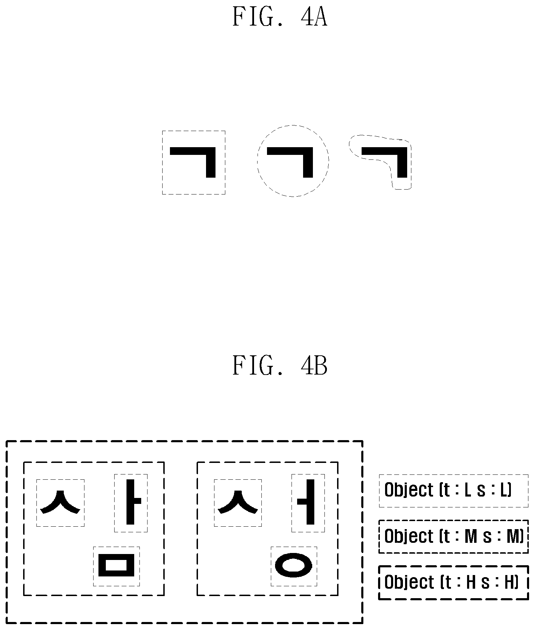

The storage unit 120 stores an Operating System (OS) of the mobile device 100. The storage unit 120 stores applications required for the options, e.g., an audio file playback function, an image/video playback function, an Internet access function, a digital broadcast reproducing function, etc. The storage unit 120 also stores user's input data and data transmitted/received in communication. For example, the storage unit 120 stores video files, game files, music files, movie files, etc. The storage unit 120 may also store an object creating program for identifying input memos by a unit of object according to a preset rule. The object creating program may create objects, according to an input time *t* and/or an input distance *s.* An object may be altered in size according to an input time *t* and an input distance *s.* For example, the object creating program may create one letter or a number of letters, as one object, according to an input time *t* and an input distance *s.* An input time *t* and an input distance s may have different values according to input modes. For example, an input time t and an input distance *s* may have relatively small values when text is input. On the contrary, an input time *t* and an input distance s may have relatively large values when an image is input. In that case, the object may include a start position, the maximum size, a start time, and the total writing time. A detailed description related to objects will be described in detail further below with reference to FIGs. 4A to 5B.

The storage unit 120 stores a matching program that stores created objects that match with index points of recorded audio data. The matching program matches a start time of an object with a timeline of recorded audio data. The storage unit 120 stores a playback program for playing back recorded audio data. If a specific object is selected (e.g., touched) on a memo displaying screen, the playback program moves the playback position to an index point of the recorded audio data that matches with the selected object and plays back the recorded audio data.

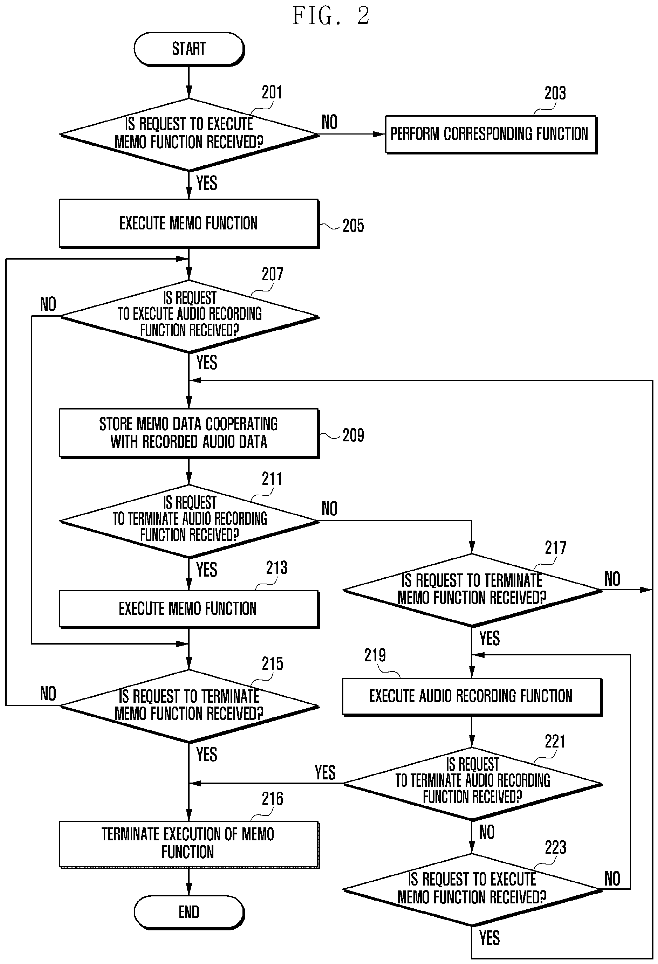

The controller 110 controls the entire operation of the mobile device 100 and the signals between the components in the mobile device 100. The controller 110 also performs a data processing function. The controller 110 may be a Central Processing Unit (CPU), a Micro-Processor Unit (MPU), an Application Processor, etc. In particular, the controller 110 controls the operation of the memo function to cooperate with an audio recording function. That is, the controller 110 can control the memo writing procedure and the memo storing procedure. The controller 110 also controls a procedure for creating objects according to a preset rule. The controller 110 also controls a procedure for outputting the written memos. A detailed description related to the control operations will be explained in detail further below with reference to FIGs. 2 and 7.

Referring to FIG. 1, the mobile device may selectively further include various types of components, for example, a Global Positioning System (GPS) module, a digital broadcast module for receiving and reproducing broadcasts, an audio sound playback module such as an MP3 module, a short-range communication module for short-range communication, etc. With the trend of digital convergence, although it is not possible to list all the modifications of mobile devices in this description, it will be easily appreciated by those skilled in the art that the other components equivalent to the above-listed components may be further included to the mobile device according to the exemplary embodiments of the present invention.

FIG. 2 illustrates a flowchart describing a method for writing a memo according to a first exemplary embodiment of the present invention.

Referring to FIGs. 1 and 2, the controller 110 determines whether a request is received to execute a memo function at step 201. If the controller 110 ascertains that a request is received which differs from a request for the execution of a memo function at step 201, the controller 110 performs a corresponding operation at step 203. For example, the controller 110 executes a music playback function, a broadcast playback function, or an Internet access function according to a user's request, or maintains the idle state. On the contrary, if the controller 110 ascertains that a request is received to execute a memo function at step 201, the controller 110 executes the memo function at step 205. That is, the controller 110 controls the touch screen 130 to display a memo writing screen and stores a memo, if the memo is input to the touch screen 130, in the storage unit 120.

After that, the controller 110 determines whether a request is received to execute an audio recording function while executing the memo function at step 207. If the controller 110 ascertains that a request is received to execute an audio recording function while executing the memo function at step 207, the controller 110 maps input audio data to memo data and stores it at step 209. To this end, if the controller 110 ascertains that a memo is input to the memo writing screen, the controller 110 creates the object according to a preset rule, matches the created memo object with an index point of the input audio data, and stores it. The process for creating the object according to a preset rule will be described in detail further below with reference to FIGs. 4A to 5B.

After storing the audio data and the memo data at step 209, the controller 110 determines whether a request is received to terminate an audio recording function at step 211. If the controller 110 ascertains that a request is received to terminate an audio recording function at step 211, the controller 110 terminates the audio recording function, and maintains the execution of the memo function at step 213. After that, the controller 110 determines whether a request is received to terminate the memo function at step 215. If the controller 110 ascertains that a request is received to terminate the memo function at step 215, the controller 110 terminates the execution of the memo function at step 216. On the contrary, if the controller 110 ascertains that a request is not made to terminate the memo function at step 215, the controller 110 returns to and proceeds with step 207.

Meanwhile, if the controller 110 ascertains that a request is not made to execute an audio recording function while executing the memo function at step 207, the controller 110 proceeds with step 215.

Referring back to step 211, if the controller 110 ascertains that a request is not made to terminate an audio recording function at step 211, the controller 110 determines whether a request is received to terminate the memo function at step 217. If the controller 110 ascertains that a request is not made to terminate the memo function at step 217, the controller 110 returns to and proceeds with step 209. On the contrary, if the controller 110 ascertains that a request is received to terminate the memo function at step 217, the controller 110 terminates the memo function and maintains the execution of the audio recording function at step 219. After that, the controller 110 determines whether a request is received to terminate the audio recording function at step 221. If the controller 110 ascertains that a request is received to terminate the audio recording function at step 221, the controller 110 terminates the execution of the audio recording function at step 216. On the contrary, if the controller 110 ascertains that a request is not made to terminate the audio recording function at step 221, the controller 110 determines whether a request is received to execute a memo function at step 223. If the controller 110 ascertains that a request is not made to execute a memo function at step 223, the controller 110 returns to and proceeds with step 219. On the contrary, if the controller 110 ascertains that a request is received to execute a memo function at step 223, the controller 110 returns to and proceeds with step 209.

Although the exemplary embodiment is implemented in such a way that an audio recording function is executed while a memo function is being executed, it should be understood that the present invention is not limited to the exemplary embodiment. For example, the exemplary embodiment may be modified in such a way that a memo function is executed while an audio recording function is being executed, or a memo function and an audio recording function are executed together. In addition, although the exemplary embodiment is implemented in such a way that a memo function or an audio recording function is separately disenabled, it should be understood that the present invention is not limited to the exemplary embodiment. For example, the exemplary embodiment may be modified in such a way that, while a memo function and an audio recording function are being executed, if a signal for terminating the execution of the memo function is input, the controller disenables both the memo function and the audio recording function. Alternatively, the exemplary embodiment may also be modified in such a way that, while a memo function and an audio recording function are being executed, if a signal for terminating the execution of the audio recording function is input, the controller disenables both the memo function and the audio recording function.

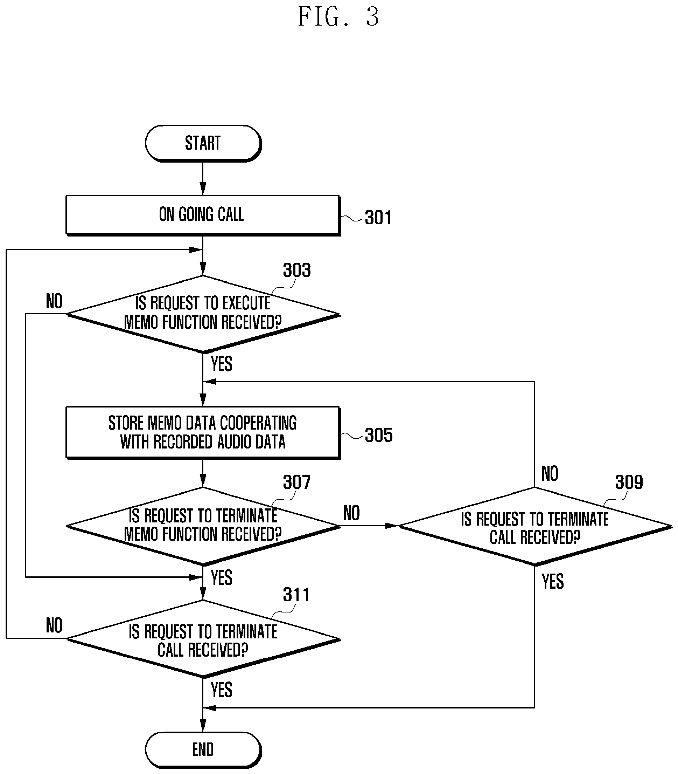

FIG. 3 illustrates a flowchart describing a method for writing a memo according to a second exemplary embodiment of the present invention.

Referring to FIG. 3, it is assumed that the mobile device 100 is being used for a call at step 301. During the call, the controller 110 determines whether a request is received to execute a memo function at step 303. If the controller 110 ascertains that a request is received to execute a memo function at step 303, the controller 110 maps audio data to memo data and stores it at step 305. To this end, if the controller 110 ascertains that a memo is input to the memo writing screen, the controller 110 creates the object according to a preset rule, matches the created memo object with an index point of the input audio data, and stores it. The process for creating the object according to a preset rule will be described in detail further below with reference to FIGs. 4A to 5B.

After storing the audio data and the memo data at step 305, the controller 110 determines whether a request is received to terminate a memo function at step 307. If the controller 110 ascertains that a request is not made to terminate a memo function at step 307, the controller 110 determines whether a request for terminating a call is received at step 309. Here, the request for terminating a call may be a signal. If the controller 110 ascertains that a request for terminating a call is received at step 309, the controller 110 terminates the current call and the memo function. On the contrary, if the controller 110 ascertains that a request for terminating a call is not received at step 309, the controller 110 returns to step 305.

Referring back to step 307, if the controller 110 ascertains that a request is received to terminate a memo function at step 307, the controller 110 determines whether a request for terminating a call is received at step 311. Here, the request for terminating a call may be a signal. If the controller 110 ascertains that a request for terminating a call is received at step 311, the controller 110 terminates the current call. On the contrary, if the controller 110 ascertains that a request for terminating a call is not received at step 311, the controller 110 returns to step 303. Meanwhile, if the controller 110 ascertains that a request is not made to execute a memo function at step 303, the controller 110 proceeds with step 311.

Although the exemplary embodiment is implemented in such a way that a memo function is executed during a call, it should be understood that the invention is not limited to the exemplary embodiment. For example, the exemplary embodiment may be modified in such a way that a memo function is executed while an audio file, e.g., a music file, or a broadcast or a video file is being played back.

FIGs. 4A and 4B illustrate views describing a method for creating objects according to an exemplary embodiment of the present invention.

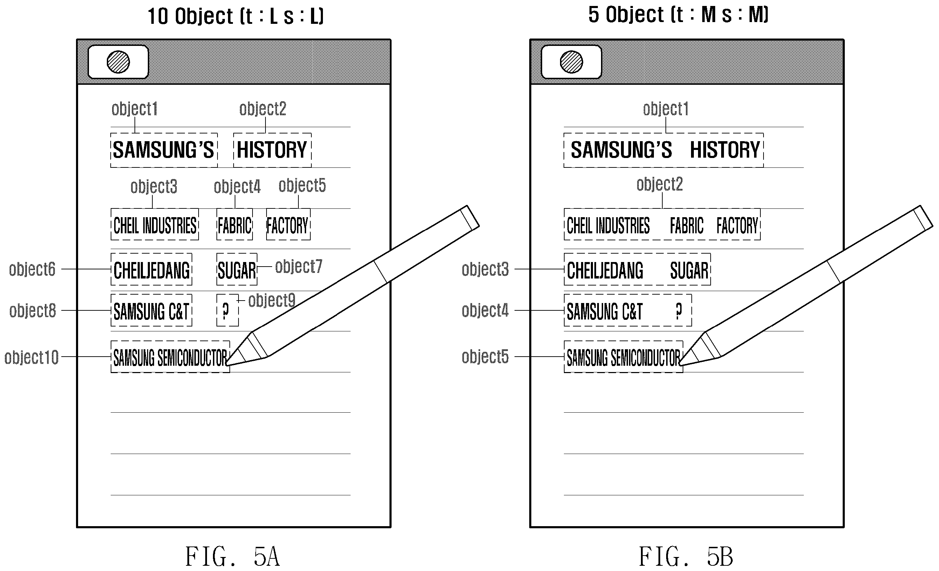

FIGs. 5A and 5B illustrate views describing a method for creating objects according to an exemplary embodiment of the present invention.

Referring to FIGs. 1 to 5B, an object refers to memo data created by a touch that starts to draw a line, a curve, a diagram, or the like, until completing a drawing or a letter, without losing the contact. Examples of an object are a letter, a dot, a check mark, a symbol, etc. Alternatively, as shown in FIG. 4A, the object may be defined as various patterns including letters, symbols, figures, diagrams, etc., e.g., a triangle, a rectangle, a circle, etc.

A number of objects may be combined to form one object. For example, as shown in FIG. 4B, vowels and consonants in Korean (or Hangeul) ' 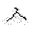 ' (read as 'siot'), ' 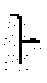 ' (read as 'a'), ' 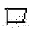 ' (read as 'mieum'), ' 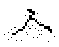 ' (read as 'siot'), ' 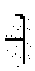 ' (read as 'eo'), and ' 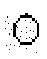 ' (read as 'ieung') can be defined as respective objects. In addition, syllables in Korean, ' 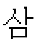 ' (read as 'sam') and ' 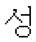 ' (read as 'sung'), can be defined as respective objects. One word in Korean, ' 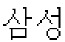 ' (read as 'samsung'), can be defined as one object. The size of an object created when a memo is input depends on object creating rules, including an input time t and/or an input length s. That is, as shown in FIGs. 5A and 5B, although the same memo is input to the mobile device 100, 10 or 5 objects may be created according to the object creation rules.

Referring to FIGs. 5A and 5B, the labels 'object 1', 'object 2', ... 'object 10', are illustrated for the sake of convenience in description, and are not necessarily displayed on the screen in an actual implementation.

An input time t and an input length s to create an object may be fixed to preset values according to a manufacturer's setting. Alternatively, they may be set to corresponding values according to a user's settings. Alternatively, they may be designed to a number of levels respectively and then set to corresponding levels according to the user's selection. For example, as shown in FIGs. 4A and 4B, the input time t and the input length s may be designed to be set as one of three levels, High, Medium, and Low, via an option menu.

The input time t and the input length s may have different values according to input modes. For example, the input time t and the input length s may have a relatively small value, the Low level from the High, Medium and Low levels, in a letter input mode, and a relatively large value, the High level, in a drawing mode.

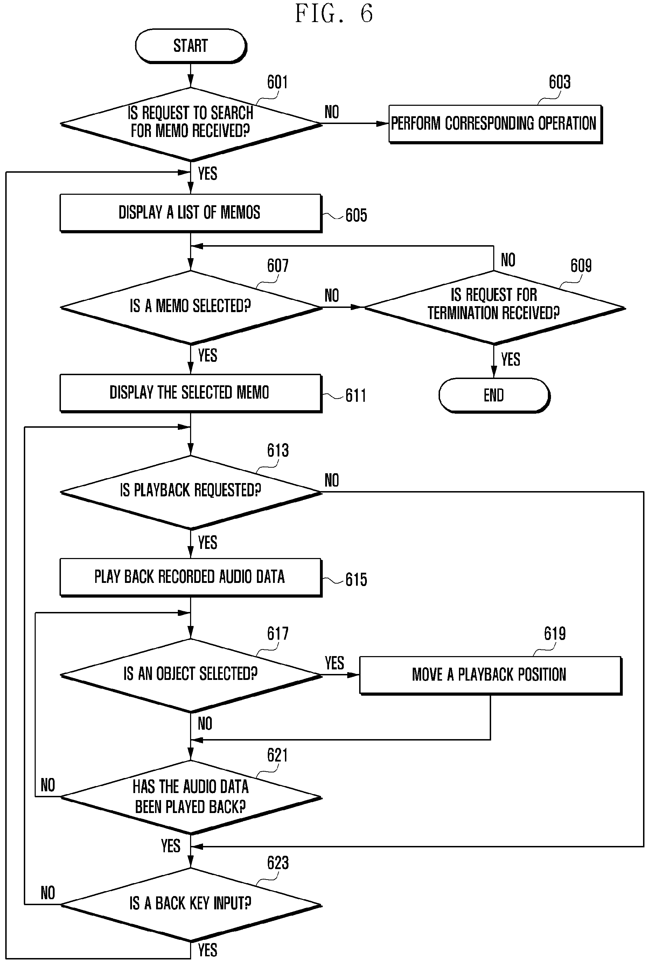

FIG. 6 illustrates a flowchart that describing a method for outputting a memo according to an exemplary embodiment of the present invention.

FIG. 7 illustrates screens displaying a created memo on a screen according to an exemplary embodiment of the present invention.

Referring to FIGs. 1 to 7, the controller 110 determines whether a request is received to search for a memo at step 601. If the controller 110 ascertains that a request is received which differs from a request for the search of a memo at step 601, the controller 110 performs a corresponding operation at step 603. For example, the controller 110 executes a music playback function, a broadcast playback function, or an Internet access function according to a user's request, or maintains the idle state.

On the contrary, if the controller 110 ascertains that a request is received to search for a memo at step 601, the controller 110 controls to display a list of memos stored in the storage unit 120 at step 605. The displayed list includes memos associated with recorded audio data and memos that are not associated with recorded audio data. The controller 110 may control to display a list of memos, distinguishing between memos with recorded audio data and memos that are not associated with recorded audio data. For example, the controller 110 may control to display marks (e.g., icons) at one end of the memos with recorded audio data. Alternatively, the controller 110 may divide an area of a list of memos into two sub areas and control to display memos with recorded audio data in one sub-area and memos that are not associated with recorded audio data in another sub-area. Alternatively, the controller 110 may control to provide an option menu for selecting memos with recorded audio data and memos that are not associated with recorded audio data, and control to display only a list of types of memos selected via the option menu.

After controlling to display a list of memos at step 605, the controller 110 determines whether a specific memo is selected at step 607. If the controller 110 ascertains that a specific memo is not selected at step 607, the controller 110determines whether a request for termination is received at step 609. Here, the request for termination may be a signal. If the controller 110 ascertains that a request for termination is received at step 609, the controller 110 terminates searching for a memo. On the contrary, if the controller ascertains that a request for termination is not received at step 609, the controller 110 returns to step 607.

Meanwhile, if the controller 110 ascertains that a specific memo is selected at step 607, the controller 110 controls to output the selected memo at step 611. In an exemplary embodiment of the invention, it is assumed that the selected memo is a memo associated with recorded audio data.

Referring to FIG. 7, the screen for displaying the selected memo includes a first area 1 for displaying the recorded audio data and a second area 2 for displaying the memo content. The first area 1 includes a status bar (or progress bar) 3 for displaying a playback state of the recorded audio data. The status bar 3 includes a slide bar 4 and a timeline 5 to show a current playback position of the recorded audio data. The timeline 5 may display one area that matches an object and the other area that is not matched with an object, in different colors, thereby distinguishing between the two areas.

After controlling to display a memo associated with the recorded audio data at step 611, the controller 110 determines whether a request is received to play back recorded audio data at step 613. Requesting the playback of recorded audio data may be achieved via a playback menu or a double touch of a specific object. The requesting method is an example, so it should be understood that the invention is not limited thereto. That is, requesting the playback of recorded audio data may be achieved via a variety of modes. If the controller 110 ascertains that a request is received to play back recorded audio data at step 613, the controller 110 plays back the recorded audio data at step 615. The controller 110 can control to vary the background color of the object in the second area 2 corresponding to the playback of the recorded audio data. This is to assist the user in easily identifying the memo content related to the recorded audio data that is currently being played back. For example, as shown in diagrams 710 and 720 of FIG. 7, the controller 110 may control to vary the background color of the object in the second area 2 while playing back the recorded audio data.

After playing back the recorded audio data at step 615, the controller 110 determines whether a specific object is selected at step 617. If the controller 110 ascertains that a specific object is selected at step 617, the controller 110 moves the playback position of the recorded audio data at step 619. That is, the controller 110 moves the playback position to a point where the object is selected and plays back the recorded audio data from the point. For example, as shown in diagram 720 of FIG. 7, if the user selects (e.g., touches) an object 'Samsung C&T', the controller 110 plays back the recorded audio data from a position of the index point mapped to the object 'Samsung C&T'. The controller 110 may move the playback position of the recorded audio data to a position to be played back, based on the start time included in the selected object 'Samsung C&T'. That is, the controller 110 moves the slide bar 4 of the status bar 3 based on a start time of the object. Alternatively, the controller 110 may move the playback position of the recorded audio data to a position to be played back, based on a touch spot (e.g., point) to select the object 'Samsung C&T'. That is, the controller 110 moves the slide bar 4 of the status bar 3 based on a ratio of a length from a start position of the object to a touch point to an entire length of the object. For example, if it is assumed that the object 'Samsung C&T' starts at a 5 second time point in the timeline and the total running time is 12 seconds, and the user touches a middle in the object, the controller 110 moves the playback position to an 11 second (equal to the start time point of 5 seconds plus half of the running time of the object, which is 6 seconds) time point (e.g., position) in the timeline, and plays back the recorded audio data. To this end, the controller 110 detects a touch on the object and calculates the ratio of a length from the start position of the object to the touch point to the entire length of the object. For example, if a memo is written in the horizontal direction (or a horizontal writing mode) and the user touches a point on the memo, the controller 110 can calculate the ratio of the touch point to the total length of the memo. Likewise, if a memo is written in the vertical direction (or a vertical writing mode) and the user touches a point on the memo, the controller 110 can calculate the ratio of the touch point to the total length of the memo.

On the contrary, if the controller 110 ascertains that a specific object is not selected at step 617, the controller 110 determines whether a playback completion signal for the recorded audio data is input at step 621. If the controller 110 ascertains that a playback completion signal for the recorded audio data is not input at step 621, the controller 110 returns to and proceeds with step 617. On the contrary, if the controller 110 ascertains that a playback completion signal for the recorded audio data is input at step 621, the controller 110 determines whether a back key is input at step 623. If the controller 110 ascertains that the back key is not input at step 623, the controller 110 returns to and proceeds with step 613. On the contrary, if the controller 110 ascertains that the back key is input at step 623, the controller 110 returns to and proceeds with step 605 where the controller 110 controls to display a list of memos. Meanwhile, if the controller 110 ascertains that a request is not made to play back recorded audio data at step 613, the controller 110 proceeds with step 623.

Referring to FIGs. 6 and 7, the user may alter the playback position of the recorded audio data by touching and dragging the slide bar 4 to a corresponding position to be played back. Alternatively, the user may alter the playback position of the recorded audio data by touching a time point on the timeline 5. The controller 110 may stop playing back the recorded audio data or pausing on the playback, according to a user's request.

The controller 110 can control the editing function for a written memo, i.e., the deletion, modification and addition of a specific object. For example, if the controller 110 detects the presence of a long touch event on a specific object, meaning that a touching operation is received on the object over a preset period of time, the controller 110 controls to output a menu of deletion, modification and addition items and executes a function corresponding to a user's selection. The controller 110 may control the movement of the object. For example, the user can move an object via a drag and drop action. This function allows the user to arrange memos in his/her desired mode.

The controller 110 also controls the arrangement function of objects. This allows users to arrange memos, randomly or disorderly located on the memo writing screen, in an orderly mode, e.g., on a timeline of recorded audio data, thereby enhancing use convenience. The controller 110 also controls the copying, cutting and pasting function of objects, according to a user's request.

The controller 110 also provides a function for modifying synchronization of recorded audio data. For example, the user can modify the index point of recorded audio data, matching with a start position of an object. This makes it possible to set a time point when the user made a memo to a time point when a speaker made a speech. That is, since a user is apt to make a memo after a speaker's speech, the recorded audio data is not synchronized with the memo. In that case, the user can choose a memo to be edited, select the synchronization modification menu, and then move the memo to a corresponding time point on the timeline via a slide bar.

As described above, the system and method, according to exemplary embodiments of the present invention, can execute a memo function to cooperate with an audio recording function, synchronize the memo data with the recorded audio data, and store them, so that users can easily check or detect the memo. In addition, the system and method can create a number of objects corresponding to input memos, and store the created objects that match with index points of recorded audio data, thereby moving a position where recorded audio data is played back, according to the selection of an object on a screen displaying a memo. That is, users can easily play back recorded audio data from a time point related to a corresponding memo.

As described above, the system and method for operating a memo function cooperating with audio recording function, according to exemplary embodiments of the present invention, can be implemented with program commands that can be conducted via various types of computers and recorded in non-transitory computer-readable recording media. The non-transitory computer-readable recording media may contain program commands, data files, data structures, or the like, or a combination thereof. The program commands recorded in the non-transitory computer-readable recording media may be designed or configured to comply with one or more aspects of the present invention or may be software well-known to the ordinary person skilled in the art. The non-transitory computer-readable recording media includes hardware systems for storing and performing program commands. Examples of the hardware systems are magnetic media such as a hard disk, a floppy disk, a magnetic tape, optical media such as Compact Disc (CD)-Read Only Memory (ROM) and Digital Versatile Disc (DVD), Magneto-Optical Media, such as a floptical disk, ROM, Random Access Memory (RAM), flash memory, etc. The program commands include assembly language or machine code complied by a complier and a higher level language interpreted by an interpreter. The hardware systems may be implemented with at least one software module to comply with one or more aspects of the present invention.

While the invention has been shown and described with reference to certain exemplary embodiments thereof, it will be understood by those skilled in the art that various changes in form and details may be made therein without departing from the scope of the invention as defined by the appended claims.

## Claims

1. A method for operating a memo function cooperating with an audio recording function, to allow a user to input and store a memo associated with recorded audio data, the method comprising:
executing a memo function and an audio recording function, wherein the memo function is inputting and storing a memo as memo data, and the audio recording function is collecting and recording an audio signal as audio data;
receiving the memo data and the audio data simultaneously in real time;
synchronizing the memo data with the audio data in response to the receiving of the memo data and the audio data, wherein the memo data comprises a plurality of objects, wherein an object is an unit of inputting memo, having an input time and an input length, and each object is mapped to an index time point on the timeline of the audio data;
storing a memo including memo data synchronized with audio data,
outputting a screen representing the stored memo on a touch screen, wherein the screen displays a progress bar for displaying a playback state of the recorded audio data to a first area and displays the memo data comprising the plurality of objects, each having a size according to its input length, to a second area;
receiving a request for selecting an object of the plurality of objects while the audio data is played back; **characterized in** further comprising:
moving playback of the audio data to a selected time point based on an index time point mapped to the selected object and a ratio of a length from a start position of the selected object to a touch point on the selected object, to an entire length of the selected object.

2. The method of claim 1, wherein the moving playback of the audio data comprises:
moving a slide bar of the progress bar to a position of the selected time point ; and
playing back the audio data from the position of the selected time point.

3. The method of claim 2, wherein the moving of the slide bar of the progress bar comprises at least one of:
moving the slide bar of the progress bar based on a start time of the selected object; and
moving the slide bar of the progress bar based on a ratio of a length from a start position of the selected object to the touch point on the selected object, to an entire length of the selected object.

4. The method of claim 1, further comprising at least one of:
arranging the plurality of objects according to a created order when an arrangement function is executed;
editing the objects, wherein the editing includes deleting, modifying, adding, copying, and cutting and pasting function of objects ; and
modifying a synchronization between the audio data and the memo data.

5. The method of claim 1, further comprising:
receiving the audio data via an audio processing unit and the memo data via an input unit.

6. The method of claim 5, wherein the storing of the memo including the memo data synchronized with the audio data comprises:
creating at least one object from the received memo data according to a preset rule; and
synchronizing the created at least one object with a respective index time point of the audio data.

7. The method of claim 6, wherein the preset rule comprises at least one of a time variable and a length variable.

8. The method of claim 7, wherein the creating of the at least one object comprises:
creating, based on a time point when the memo data is first input and a position where the memo data is first input, the at least one object in a certain period of time and within a certain length.

9. The method of claim 6, wherein the preset rule is set with different variables according to modes for inputting the memo.

10. A computer program product comprising instructions configured to cause a processor system to perform the method of claim 1.

11. A system for operating a memo function cooperating with an audio recording function, to allow a user to input and store a memo associated with recorded audio data, the system comprising:
a controller for:
executing a memo function and an audio recording function, wherein the memo function is inputting and storing a memo as memo data, and the audio recording function is collecting and recording an audio signal as audio data;
receiving the memo data and the audio data simultaneously in real time,
synchronizing the memo data with the audio data in response to the receiving of the memo data and the audio data, wherein the memo data comprises a plurality of objects, wherein an object is an unit of inputting memo, having an input time and an input length, and each object is mapped to an index time point on the timeline of the audio data,
receiving a request for selecting an object of the plurality of objects while the audio data is played back, and
moving playback of the audio data to a selected time point based on an index time point mapped to the selected object and a ratio of a length from a start position of the selected object to a touch point on the selected object, to an entire length of the selected object,
a storage unit for storing a memo including memo data synchronized with audio data; and
a touch screen for displaying a screen for displaying the stored memo, wherein the screen displays a progress bar for displaying a playback state of the recorded audio data to a first area and displays the memo data comprising the plurality of objects, each having a size according to its input length, to a second area.

12. The system of claim 11, wherein the controller is configured to move a slide bar of the progress bar to a position of the selected time point, and play the audio data from the position of the selected time point.

13. The system of claim 12, wherein the controller is configured to move the slide bar of the progress bar based on a start time of the selected object.

14. The system of claim 12, wherein the controller is configured to move the slide bar of the progress bar based on a ratio of a length from a start position of the selected object to the touch point on the selected object, to an entire length of the selected object.

15. The system of claim 11, wherein the controller is configured to arrange the plurality of objects according to a created order when an arrangement function is executed,
wherein the controller is configured to control an editing function comprising a deletion of the object, a modification of the object, a addition of the object, a copy of the object, and a cut and paste of the object, and
wherein the controller is configured to control a function modifying a synchronization between the audio data and the memo data.

16. The system of claim 11, further comprising:
an input unit for inputting a request for executing the memo function and the audio recording function; and
an audio processing unit for receiving audio signals and creating the audio data.

17. The system of claim 16, wherein the controller is configured to create at least one object from the received memo data according to a preset rule, and synchronize the created at least one object with a respective index point of the audio data, and store the memo including the memo data synchronized with the audio data.

18. The system of claim 17, wherein the preset rule comprises at least one of a time variable and a length variable.

19. The system of claim 18, wherein the controller is configured to create, based on a time point when the memo data is first input and a position where the memo data is first input, the at least one object in a certain period of time and within a certain length.

20. The system of claim 17, wherein the preset rule is set with different variables according to modes for inputting the memo.

21. The system of claim 16, wherein the touch screen comprises the input unit.

## Patentansprüche

1. Verfahren zum Betreiben einer Notizfunktion, die mit einer Audioaufzeichnungsfunktion zusammenarbeitet, um einem Benutzer zu ermöglichen, eine Notiz einzugeben und zu speichern, die mit aufgezeichneten Audiodaten assoziiert ist, wobei das Verfahren Folgendes umfasst:
Ausführen einer Notizfunktion und einer Audioaufzeichnungsfunktion, wobei die Notizfunktion das Eingeben und Speichern einer Notiz als Notizdaten ist und die Audioaufzeichnungsfunktion das Sammeln und Aufzeichnen eines Audiosignals als Audiodaten ist;
gleichzeitiges Empfangen der Notizdaten und der Audiodaten in Echtzeit;
Synchronisieren der Notizdaten mit den Audiodaten als Antwort auf das Empfangen der Notizdaten und der Audiodaten, wobei die Notizdaten eine Vielzahl von Objekten umfassen, wobei ein Objekt eine Einheit zum Eingeben der Notiz ist, die eine Eingabezeit und eine Eingabelänge hat, und jedes Objekt einem Indexzeitpunkt auf der Zeitachse der Audiodaten zugeordnet ist;
Speichern einer Notiz, die Notizdaten enthält, die mit Audiodaten synchronisiert sind,
Ausgeben eines Bildschirms, der die gespeicherte Notiz auf einem Touchscreen darstellt, wobei der Bildschirm einen Fortschrittsbalken zum Anzeigen eines Wiedergabezustands der aufgezeichneten Audiodaten in einem ersten Bereich anzeigt und die Notizdaten, die die Vielzahl von Objekten umfassen, von denen jedes eine Größe entsprechend seiner Eingabelänge hat, in einem zweiten Bereich anzeigt;
Empfangen einer Anfrage zum Auswählen eines Objekts aus der Vielzahl von Objekten, während die Audiodaten wiedergegeben werden; **gekennzeichnet dadurch, dass** es ferner Folgendes umfasst:
Bewegen der Wiedergabe der Audiodaten zu einem ausgewählten Zeitpunkt basierend auf einem Indexzeitpunkt, der dem ausgewählten Objekt zugeordnet ist, und einem Verhältnis einer Länge von einer Ausgangsposition des ausgewählten Objekts zu einem Berührungspunkt auf dem ausgewählten Objekt zu einer gesamten Länge des ausgewählten Objekts.

2. Verfahren nach Anspruch 1, wobei das Bewegen der Wiedergabe der Audiodaten Folgendes umfasst:
Bewegen eines Schiebereglers des Fortschrittsbalkens zu einer Position des ausgewählten Zeitpunkts; und
Wiedergeben der Audiodaten von der Position des ausgewählten Zeitpunkts.

3. Verfahren nach Anspruch 2, wobei das Bewegen des Schiebereglers des Fortschrittsbalkens mindestens eines von Folgendem umfasst:
Bewegen des Schiebereglers des Fortschrittsbalkens basierend auf einer Startzeit des ausgewählten Objekts; und
Bewegen des Schiebereglers des Fortschrittsbalkens basierend auf einem Verhältnis einer Länge von einer Ausgangsposition des ausgewählten Objekts zu dem Berührungspunkt auf dem ausgewählten Objekt zu einer gesamten Länge des ausgewählten Objekts.

4. Verfahren nach Anspruch 1, welches ferner eines von Folgendem umfasst:
Anordnen der Vielzahl von Objekten gemäß einer erstellten Reihenfolge, wenn eine Anordnungsfunktion ausgeführt wird;
Bearbeiten der Objekte, wobei das Bearbeiten die Lösch-, Modifizier-, Addier-, Kopier- und Ausschneide- und Einfügefunktion von Objekten einschließt; und/oder
Modifizieren einer Synchronisation zwischen den Audiodaten und den Notizdaten.

5. Verfahren nach Anspruch 1, welches ferner umfasst:
Empfangen der Audiodaten über eine Audioverarbeitungseinheit und der Notizdaten über eine Eingabeeinheit.

6. Verfahren nach Anspruch 5, wobei das Speichern der Notiz, die die Notizdaten enthält, die mit den Audiodaten synchronisiert sind, Folgendes umfasst:
Erstellen mindestens eines Objekts aus den empfangenen Notizdaten gemäß einer voreingestellten Regel; und
Synchronisieren des erstellten mindestens einen Objekts mit einem jeweiligen Indexzeitpunkt der Audiodaten.

7. Verfahren nach Anspruch 6, wobei die voreingestellte Regel eine Zeitvariable und/oder eine Längenvariable umfasst.

8. Verfahren nach Anspruch 7, wobei das Erstellen des mindestens einen Objekts Folgendes umfasst:
Erstellen basierend auf einem Zeitpunkt, zu dem die Notizdaten zuerst eingeben werden, und einer Position, an der die Notizdaten zuerst eingeben werden, des mindestens einen Objekts in einem gewissen Zeitraum und innerhalb einer gewissen Länge.

9. Verfahren nach Anspruch 6, wobei die voreingestellte Regel mit verschiedenen Variablen gemäß den Modi für das Eingeben der Notiz eingestellt ist.

10. Computerprogrammprodukt, das Anweisungen umfasst, die konfiguriert sind, um ein Prozessorsystem zu veranlassen, das Verfahren nach Anspruch 1 auszuführen.

11. System zum Betreiben einer Notizfunktion, die mit einer Audioaufzeichnungsfunktion zusammenarbeitet, um einem Benutzer zu ermöglichen, eine Notiz einzugeben und zu speichern, die mit aufgezeichneten Audiodaten assoziiert ist, wobei das System Folgendes umfasst:
eine Steuerung zum:
Ausführen einer Notizfunktion und einer Audioaufzeichnungsfunktion, wobei die Notizfunktion das Eingeben und Speichern einer Notiz als Notizdaten ist und die Audioaufzeichnungsfunktion das Sammeln und Aufzeichnen eines Audiosignals als Audiodaten ist;
gleichzeitiges Empfangen der Notizdaten und der Audiodaten in Echtzeit,
Synchronisieren der Notizdaten mit den Audiodaten als Antwort auf das Empfangen der Notizdaten und der Audiodaten, wobei die Notizdaten eine Vielzahl von Objekten umfassen, wobei ein Objekt eine Einheit zum Eingeben der Notiz ist, die eine Eingabezeit und eine Eingabelänge hat, und jedes Objekt einem Indexzeitpunkt auf der Zeitachse der Audiodaten zugeordnet ist,
Empfangen einer Anfrage zum Auswählen eines Objekts aus der Vielzahl von Objekten, während die Audiodaten wiedergegeben werden, und
Bewegen der Wiedergabe der Audiodaten zu einem ausgewählten Zeitpunkt basierend auf einem Indexzeitpunkt, der dem ausgewählten Objekt zugeordnet ist, und einem Verhältnis einer Länge von einer Ausgangsposition des ausgewählten Objekts zu einem Berührungspunkt auf dem ausgewählten Objekt zu einer gesamten Länge des ausgewählten Objekts,
eine Speichereinheit zum Speichern einer Notiz, die Notizdaten enthält, die mit Audiodaten synchronisiert sind; und
einen Touchscreen zum Anzeigen eines Bildschirms zum Anzeigen der gespeicherten Notiz, wobei der Bildschirm einen Fortschrittsbalken zum Anzeigen eines Wiedergabezustands der aufgezeichneten Audiodaten in einem ersten Bereich anzeigt und die Notizdaten, die die Vielzahl von Objekten umfassen, von denen jedes eine Größe gemäß seiner Eingabelänge hat, in einem zweiten Bereich anzeigt.

12. System nach Anspruch 11, wobei die Steuerung konfiguriert ist, um einen Schieberegler des Fortschrittsbalkens zu einer Position des ausgewählten Zeitpunkts zu bewegen und die Audiodaten von der Position des ausgewählten Zeitpunkts abzuspielen.

13. System nach Anspruch 12, wobei die Steuerung konfiguriert ist, um den Schieberegler des Fortschrittsbalkens basierend auf einer Startzeit des ausgewählten Objekts zu bewegen.

14. System nach Anspruch 12, wobei die Steuerung konfiguriert ist, um den Schieberegler des Fortschrittsbalkens basierend auf einem Verhältnis einer Länge von einer Ausgangsposition des ausgewählten Objekts zu dem Berührungspunkt auf dem ausgewählten Objekt zu einer gesamten Länge des ausgewählten Objekts zu bewegen.

15. System nach Anspruch 11, wobei die Steuerung konfiguriert ist, um die Vielzahl von Objekten gemäß einer erstellten Reihenfolge anzuordnen, wenn eine Anordnungsfunktion ausgeführt wird,
wobei die Steuerung konfiguriert ist, um eine Bearbeitungsfunktion zu steuern, die ein Löschen des Objekts, ein Modifizieren des Objekts, ein Addieren des Objekts, ein Kopieren des Objekts und ein Ausschneiden und Einfügen des Objekts umfasst, und
wobei die Steuerung konfiguriert ist, um eine Funktion zu steuern, die eine Synchronisation zwischen den Audiodaten und den Notizdaten modifiziert.

16. System nach Anspruch 11, welches ferner umfasst:
eine Eingabeeinheit zum Eingeben einer Anfrage zum Ausführen der Notizfunktion und der Audioaufzeichnungsfunktion; und
eine Audioverarbeitungseinheit zum Empfangen von Audiosignalen und Erstellen der Audiodaten.

17. System nach Anspruch 16, wobei die Steuerung konfiguriert ist, um mindestens ein Objekt aus den empfangenen Notizdaten gemäß einer voreingestellten Regel zu erstellen und das erstellte mindestens eine Objekt mit einem betreffenden Indexpunkt der Audiodaten zu synchronisieren und die Notiz zu speichern, die die Notizdaten enthält, die mit den Audiodaten synchronisiert sind.

18. System nach Anspruch 17, wobei die voreingestellte Regel eine Zeitvariable und/oder eine Längenvariable umfasst.

19. System nach Anspruch 18, wobei die Steuerung konfiguriert ist, um basierend auf einem Zeitpunkt, zu dem die Notizdaten zuerst eingegeben werden und einer Position, an der die Notizdaten zuerst eingegeben werden, das mindestens eine Objekt in einem gewissen Zeitraum und innerhalb einer gewissen Länge zu erstellen.

20. System nach Anspruch 17, wobei die voreingestellte Regel mit verschiedenen Variablen gemäß den Modi zum Eingeben der Notiz eingestellt ist.

21. System nach Anspruch 16, wobei der Touchscreen die Eingabeeinheit umfasst.

## Revendications

1. Procédé pour exécuter une fonction de note coopérant avec une fonction d'enregistrement audio, pour permettre à un utilisateur d'entrer et de stocker une note associée à des données audio enregistrées, le procédé comprenant :
exécuter une fonction de note et une fonction d'enregistrement audio, où la fonction de note entre et stocke une note sous forme de données de note, et la fonction d'enregistrement audio recueille et enregistre un signal audio sous forme de données audio ;
recevoir les données de note et les données audio simultanément en temps réel ;
synchroniser les données de note avec les données audio en réponse à la réception des données de note et des données audio, où les données de note comprennent une pluralité d'objets, où un objet est une unité d'entrée de note, ayant un temps d'entrée et une longueur d'entrée, et chaque objet est mappé à un point temporel d'index sur la ligne de temps des données audio ;
stocker une note incluant des données de note synchronisées avec des données audio,
délivrer en sortie un écran représentant la note stockée sur un écran tactile, où l'écran affiche une barre de progression permettant d'afficher un état de lecture des données audio enregistrées sur une première zone et affiche les données de note comprenant la pluralité d'objets, chacun ayant une taille selon sa longueur d'entrée, sur une deuxième zone ;
recevoir une demande pour sélectionner un objet de la pluralité d'objets lors de la lecture des données audio ; **caractérisé en ce qu'**il comprend en outre :
déplacer la lecture des données audio vers un point temporel sélectionné sur la base d'un point temporel d'index mappé à l'objet sélectionné et d'un rapport d'une longueur entre une position de départ de l'objet sélectionné et un point de contact sur l'objet sélectionné, sur une longueur entière de l'objet sélectionné.

2. Procédé selon la revendication 1, où le déplacement de la lecture des données audio comprend :
déplacer une barre de défilement de la barre de progression vers une position du point temporel sélectionné et
lire les données audio à partir de la position du point temporel sélectionné.

3. Procédé selon la revendication 2, où le déplacement de la barre de défilement de la barre de progression comprend au moins l'un parmi :
le déplacement de la barre de défilement de la barre de progression sur la base d'un temps de début de l'objet sélectionné ; et
le déplacement de la barre de défilement de la barre de progression sur la base d'un rapport d'une longueur entre une position de départ de l'objet sélectionné et le point de contact sur l'objet sélectionné, sur une longueur entière de l'objet sélectionné.

4. Procédé selon la revendication 1, comprenant en outre au moins l'un parmi :
l'agencement de la pluralité d'objets selon un ordre créé lorsqu'une fonction d'agencement est exécutée ;
l'édition des objets, où l'édition comprend la fonction de supprimer, de modifier, d'ajouter, de copier et de couper-coller d'objets ; et
la modification d'une synchronisation entre les données audio et les données de note.

5. Procédé selon la revendication 1, comprenant en outre :
la réception des données audio par l'intermédiaire d'une unité de traitement audio et des données de note par l'intermédiaire d'une unité d'entrée.

6. Procédé selon la revendication 5, où le stockage de la note incluant les données de note synchronisées avec les données audio comprend :
la création d'au moins un objet à partir des données de note reçues selon une règle prédéfinie ; et
la synchronisation de l'au moins un objet créé avec un point temporel d'index respectif des données audio.

7. Procédé selon la revendication 6, où la règle prédéfinie comprend au moins l'une parmi une variable de temps et une variable de longueur.

8. Procédé selon la revendication 7, où la création de l'au moins un objet comprend :
la création, sur la base d'un point temporel où les données de note constituent une première entrée et d'une position dans laquelle les données de note constituent une première entrée, de l'au moins un objet dans une certaine période de temps et compris dans une certaine longueur.

9. Procédé selon la revendication 6, où la règle prédéfinie est établie avec différentes variables selon des modes d'entrée de la note.

10. Produit de programme informatique comprenant des instructions configurées pour amener un système de processeur à mettre en œuvre le procédé de la revendication 1.

11. Système pour exécuter une fonction de note coopérant avec une fonction d'enregistrement audio, pour permettre à un utilisateur d'entrer et de stocker une note associée à des données audio enregistrées, le système comprenant :
un contrôleur pour :
exécuter une fonction de note et une fonction d'enregistrement audio, où la fonction de note entre et stocke une note sous forme de données de note, et la fonction d'enregistrement audio recueille et enregistre un signal audio sous forme de données audio ;
recevoir les données de note et les données audio simultanément en temps réel,
synchroniser les données de note avec les données audio en réponse à la réception des données de note et des données audio, où les données de note comprennent une pluralité d'objets, où un objet est une unité d'entrée de note, ayant un temps d'entrée et une longueur d'entrée, et chaque objet est mappé à un point temporel d'index sur la ligne de temps des données audio,
recevoir une demande pour sélectionner un objet de la pluralité d'objets lors de la lecture des données audio, et
déplacer la lecture des données audio vers un point temporel sélectionné sur la base d'un point temporel d'index mappé à l'objet sélectionné et d'un rapport d'une longueur entre une position de départ de l'objet sélectionné et un point de contact sur l'objet sélectionné, sur une longueur entière de l'objet sélectionné,
une unité de stockage pour stocker une note incluant des données de note synchronisées avec des données audio ; et
un écran tactile permettant d'afficher un écran pour afficher la note stockée, où l'écran affiche une barre de progression permettant d'afficher un état de lecture des données audio enregistrées sur une première zone et affiche les données de note comprenant la pluralité d'objets, chacun ayant une taille selon sa longueur d'entrée, sur une deuxième zone.

12. Système selon la revendication 11, où le contrôleur est configuré pour déplacer une barre de défilement de la barre de progression vers une position du point temporel sélectionné et lire les données audio à partir de la position du point temporel sélectionné.

13. Système selon la revendication 12, où le contrôleur est configuré pour déplacer la barre de défilement de la barre de progression sur la base d'un temps de début de l'objet sélectionné.

14. Système selon la revendication 12, où le contrôleur est configuré pour déplacer la barre de défilement de la barre de progression sur la base d'un rapport d'une longueur entre une position de départ de l'objet sélectionné et un point de contact sur l'objet sélectionné, sur une longueur entière de l'objet sélectionné.

15. Système selon la revendication 11, où le contrôleur est configuré pour agencer la pluralité d'objets selon un ordre créé lorsqu'une fonction d'agencement est exécutée,
où le contrôleur est configuré pour commander une fonction d'édition comprenant une suppression de l'objet, une modification de l'objet, un ajout de l'objet, une copie de l'objet et un couper-coller de l'objet, et
où le contrôleur est configuré pour commander une fonction modifiant une synchronisation entre les données audio et les données de note.

16. Système selon la revendication 11, comprenant en outre :
une unité d'entrée permettant d'entrer une demande pour exécuter la fonction de note et la fonction d'enregistrement audio ; et
une unité de traitement audio permettant de recevoir des signaux audio et de créer des données audio.

17. Système selon la revendication 16, où le contrôleur est configuré pour créer au moins un objet à partir des données de note reçues selon une règle prédéfinie, et synchroniser l'au moins un objet créé avec un point d'index respectif des données audio, et stocker la note incluant les données de note synchronisées avec les données audio.

18. Système selon la revendication 17, où la règle prédéfinie comprend au moins l'une parmi une variable de temps et une variable de longueur.

19. Système selon la revendication 18, où le contrôleur est configuré pour créer, sur la base d'un point temporel où les données de note constituent une première entrée et d'une position où les données de note constituent une première entrée, l'au moins un objet dans une certaine période de temps et compris dans une certaine longueur.

20. Système selon la revendication 17, où la règle prédéfinie est établie avec différentes variables selon des modes d'entrée de la note.

21. Système selon la revendication 16, où l'écran tactile comprend l'unité d'entrée.
